# EUROPÄISCHE PATENTSCHRIFT

(11) **EP 3 508 455 B1**
(45) Veröffentlichungstag und Bekanntmachung des Hinweises auf die Patenterteilung: **29.06.2022**
(21) Anmeldenummer: 19150513.0
(22) Anmeldetag: 07.01.2019
(51) Int. Cl.: C02F 3/10

(54) **FÜLL- UND/ODER BEWUCHSKÖRPER**
PACKING AND/OR GROWTH CARRIER
CORPS DE REMPLISSAGE ET / OU D'ENCRASSEMENT

(30) Priorität: 09.01.2018 DE 102018100337
(43) Veröffentlichungstag der Anmeldung: 10.07.2019
(73) Patentinhaber: Christian Stöhr GmbH & Co. Elektro- und Kunststoffwaren KG, DE-96364 Marktrodach (DE)
(72) Erfinder: Stöhr, Michael, 96364 Marktrodach (DE); Stöhr, Henry, 96364 Marktrodach (DE)
(74) Vertreter: Pröll, Jürgen

(56) Entgegenhaltungen:
- CH-A- 554 527
- CN-U- 204 874 007
- DE-A1- 10 231 217
- DE-A1-102008 029 384
- KR-B1- 100 987 130
- US-A- 6 126 829

## Beschreibung

Die vorliegende Erfindung betrifft einen Füll- und/oder Bewuchskörper aus Kunststoff mit dem im Oberbegriff des Patentanspruches 1 angegebenen Merkmalen.

Erfindungsgemäße Füll- und/oder Bewuchskörper werden z.B. in Klärbecken von Kläranlagen oder Wasseraufbereitungsanlagen oder Trinkwasseraufbereitungsanlagen eingebracht, damit sich an den Füll- und/oder Bewuchskörpern Bakterien und/oder Kleinstorganismen ansiedeln, die das zu klärenden Abwasser im Klärbecken oder Wasserbecken reinigen. Die Füll- und/oder Bewuchskörper dienen als Grundfläche zur Besiedelung von Bakterien und Kleinstorganismen, der daduch entstehende Biofilm dient zur Biologischen Reinigung der zu klärenden Abwasser im Klärbecken oder Wasserbecken. Der Erfindungsgemäße Füll- und/oder Bewuchskörper weist eine sehr hohe spezifische biologische Besiedlungsfläche je Volumenmaß auf, dabei ist beim erfindungsgemäßen Füll- und/oder Bewuchskörper gegeben, dass dieser, obwohl als zylindrisch-, extrudiert hergestellter Füll- und/oder Bewuchskörper, dieser durch die Öffnungen an der Mantelfläche vollkommen durchströmbar ist und zugleich der Biofilm mechanisch vor Abrieb geschützt ist. Dadurch ist ein optimaler Bewuchs des Füll- und/oder Bewuchskörper durch den Biofilm zur Reinigung des Klärbeckens oder Wasserbeckens gewährleistet. Die Füll- und/oder Bewuchskörper verhindern darüber hinaus, dass die Bakterien und Kleinstorganismen beim Austausch des zu klärenden Abwassers im Klärbecken mit diesem Abgelassen und damit ausgetauscht werden.

Aus der DE 2 325 349 A ist ein Füllkörper zur regellosen Verteilung in einem biologischen Filterturm oder Filterbett bekannt. Dieser Filterkörper zeichnet sich durch eine als Begrenzungswand vorgesehene Materialwand mit mindestens zwei Öffnungen und mehreren in Längsrichtung vorgesehenen Innenwänden, die innerhalb der äußeren Begrenzungswand angeordnet sind, aus. Die Begrenzungswand und die sich radial erstreckenden Innenwände bilden dabei eine Einheit und weisen eine Oberfläche auf, an der eine biologische Aktivität auftreten soll. Die Innenwände weisen eine Oberfläche auf, die größer als die Oberfläche der äußeren Begrenzungswand ist, sodass auch diese Flächen als biologisch aktive Flächen genutzt werden. Die Innenwände werden aus vier diametralen Rippen gebildet, die sich über die gesamte Länge des Zylinders der äußeren Begrenzungswand erstrecken. Die diametralen Rippen weisen seitlich abstehende Rippen auf, die in einem spitzen Winkel zu den diametralen Rippen stehen, um so die Oberfläche zusätzlich zu vergrößern.

Aus EP 301 237 A1 ist ein Füllkörper zur Bildung von Besiedlungsflächen in Anlagen bekannt, der aus Kunststoff gefertigt ist und vorzugsweise einen zylindrischen Körpermantel mit wenigstens einer Leitfläche im Inneren aufweist. Die Leitfläche ist vollflächig ausgebildet, sodass diese den Körpermantel in mehrere Teilräume unterteilt.

Aus der US 4,122,011 A sind Füllkörper bekannt, die in Spritzgusstechnik aus Kunststoff hergestellt sind und trapezförmige Außen- und Innenwände aufweisen, die miteinander über Rippen verbunden sind. Eine zentrische Rippenanordnung aus sternförmig angeordneten Rippenwänden vermittelt dem Spritzgussteile eine höhere Stabilität. Äußere vorstehende Rippen ermöglichen es, einen Abstand zu benachbarten Füllkörpern zu sichern.

Aus der DE 102 31 217 A1 ist ein Füll- und/oder Bewuchskörper aus Kunststoff mit einem äußeren rohrförmigen Mantel und mit am Umfang vorgesehenen Durchgangsöffnungen und/oder Unterbrechungen bekannt. Der Füll- und/oder Bewuchskörper weist mindestens einen eingesetzten inneren konzentrischen rohrförmigen Innenmantel auf, wobei der Außenmantel über zwischengefügte Stege oder Lamellen mit dem Innenmantel stabil verbunden ist und die Mäntel und die Lamellen so ausgeführt sind, dass eine große aktiv nutzbare Oberfläche gegeben ist, wobei der Körper mittels Extruder im Extrudierverfahren hergestellt und abgelängt ist.

Aus der CH 554 527 A ist ein Füllkörper zur Bildung eines aus einer Mehrzahl von Füllkörpern bestehenden, aufgeschütteten Bettes einer Stoffaustauschvorrichtung bekannt. Der Füllkörper weist einen an beiden Enden offenen, rohrförmigen Teil (1) auf, dessen größte Querschnittsabmessung grösser als seine Breite ist und von dessen innerer Wand sich mindestens ein Vorsprung nach innen erstreckt. Für den Fall, dass die gesamte Länge des Füllkörpers gleich der genannten größten Querschnittsabmessung oder größer als diese ist, erstreckt sich höchstens der rohrförmige Teil des Füllkörpers über die gesamte Länge des Füllkörpers.

Aus der US 6 126 829 A ist ein Verfahren zum Behandeln von Wasser, bekannt welches folgende Verfahrensschritte umfasst:
- Platzieren mehrerer Trägerelemente in einem Gewässer, wobei geschützte Oberflächen der Trägerelemente gegen Kollision mit Oberflächen anderer Trägerelemente geschützt sind, wobei die Trägerelemente Strömungskanäle aufweisen und auch nach einem mikrobiellen Belag einen guten Wasserfluss durch diese hindurch ermöglichen hergestellt wird, wobei jedes der Trägerelemente eine Länge, Breite und/oder Höhe von mehr als 1,5 cm aufweist, jede geschützte Oberfläche größer als 100 m2/m3 Trägerelementvolumen ist und wobei eine Querschnittsfläche von Durchgangsöffnungen in einer Grenzfläche zur Umgebung jedes Trägerelements mindestens 35 % einer Grenzfläche eines homogenen Körpers mit gleichen Abmessungen beträgt; und
- in Bewegung halten der Vielzahl von Trägerelementen im Wasser, wodurch sich ein mikrobieller Film auf Oberflächen der Vielzahl von Trägerelementen bildet, und das Wasser behandelt wird.

Aus der CN 204 874 007 U ist ein stereoskopischer, spiralförmiger biologischer Träger bekannt, der eine äußere Struktur und eine innere Struktur aufweist, wobei äußere Struktur und die innere Struktur eine spiralförmige Struktur sind und zwischen diesen eine Zwischenstruktur angeordnet ist. Die Zwischenstruktur umfasst eine dünne und breite Folie, wobei diese Folien weiße Folie sind, die im Inneren der äußeren Struktur angeordnet sind.

Aus der KR 100 987 130 B1 ist eine Bodenmikroben-Kultureinheit bekannt, die in dem hohlen Abschnitt des Körpers zur Unterteilung des hohlen Abschnitts vorgesehen ist und ein Vorsprung auf einer äußeren Wandoberfläche des Körpers ausbildet, wobei der Flüssigkeitsbehälter ferner eine Dreheinheit umfasst, die mit dem Körper verbunden ist und die lebende Einheit dreht.

Aus der DE 10 2008 029 384 A1 ist ein Trägermaterial als Aufwuchsfläche für einen Biofilm in einer Flüssigkeit, bestehend aus einer Vielzahl von Kunststoffkörpern in Form von gebogenen Scheiben und/oder hyperbolischen Paraboloiden mit einer porösen Oberfläche bekannt. Der mittlere Porendurchmesser kann durch den Herstellungsprozess zwischen 10 bis 500 Mikrometer gezielt eingestellt werden kann, dass die Dichte der Trägerelemente entsprechend der Anwendung zwischen 0,7 und 2,5 g/cm 3 eingestellt wird und dass die Scheiben und/oder Paraboloide ein Verhältnis zwischen Oberfläche und Volumen zwischen 2.000 und 100.000 m2 /m3 haben.

Aus der DE 44 27 576 A1 ist ein Füllmaterial, insbesondere zur biologischen Abwasserreinigung, offenbart. Das Füllmaterial wird vorzugsweise aus rohrförmigen Rundkörpern mit netzartiger strukturierter Mantelfläche gebildet. Es ist weiterhin mindestens ein in die Oberfläche des Füllmaterials vergrößerndes Element angeordnet, wobei dieses Element vorzugsweise streifenförmig ausgebildet ist.

Nachteilig bei den bekannten Füllkörpern ist, dass, sofern sie einen Bereich des Füllkörpers als geschützte Oberfläche aufweisen, damit der Biofilm nicht mechanisch abgerieben werden kann, diese geschützte Oberfläche nicht durchströmbar ist.

Es ist daher Aufgabe der Erfindung einen stabilen, extrudierbaren Füllkörper mit einer Mantelfläche mit Öffnungen zur Durchströmbarkeit aufzuzeigen, der eine große spezifische Oberfläche, zum Bewuchs für den Biofilm vorweist, und zugleich der Füllkörper die angesiedelten Bakterien und Kleinstorganismen, den sogenannten Biofilm, vor Abrieb schützt.

Diese Aufgabe wird anhand der Ausgestaltung eines Füll- oder Bewuchskörpers gemäß den Merkmalen des Patentanspruches 1 gelöst.

Vorteilhafte Ausgestaltungen der Erfindung ergeben sich anhand der Unteransprüche und der weiteren Beschreibung.

Der erfindungsgemäße Füll- und/oder Bewuchskörper besteht aus Kunststoff. Er besitzt eine im Wesentlichen kreiszylindrische Grundform. Der Füll- und/oder Bewuchskörper bildet einen Mantel aus, der von einem eine Spirale ausbildenden Materialband gebildet ist, das den Füll- und/oder Bewuchskörper außenseitig umschließt, dabei aber regelmäßige Öffnungen an der Mantelfläche aufweist. Das Materialband bildet mit dem Füll- und/oder Bewuchskörper an dessen Ober- bzw. Unterseite eine Oberfläche aus, die eine stabile Form bildet, wobei die hohlzylindrische Form erhalten bleibt. In etwa mittig in dem Füll- und/oder Bewuchskörper ist ein Kreuz- oder Sternprofil eingelassen, das den Füll- und/oder Bewuchskörper zentral durchläuft und an der Unterseite und Oberseite des Füll- und/oder Bewuchskörpers mit dem Materialband abschließt.

Durch diese Ausgestaltung des Füll- und/oder Bewuchskörper wird zum einen eine relativ stabile Form des Füll- oder Bewuchskörpers erreicht und es wird zugleich erreicht. Zugleich ist aber ausreichend Hohlraum und Oberfläche am bzw. im Füll- und/oder Bewuchskörper vorhanden, durch den das zu klärende Abwasser, durch die Mantel- sowie Stirnseiten strömen kann und an der Oberfläche des Füll- und/oder Bewuchskörper können sich entsprechend Bakterien oder Kleinorganismen ansiedeln. Dass die Spirale bildende Materialband bildet eine hyperbolische Spirale, mit regelmäßigen Öffnungen an der Mantelfläche aus. Damit erhält der Füll- und/oder Bewuchskörper eine besonders optimierte, durchströmbare Form und Außenoberfläche bzw. Mantelfläche.

Es ist vorgesehen, dass das Materialband eine plane oder wellige Oberfläche aufweist. Durch die Welligkeit wird ermöglicht, dass auch auf dem Materialband sich Bakterien oder Kleinstlebewesen festsetzen und/oder dort anhaften können. Bei einer planen Oberfläche, die zugleich auch glatt sein kann, wird eine geringe Reibung des Bewuchskörpers beim Einsaugen und Ausstoßen über Pumpen gewährleitet. Dies wird dadurch zusätzlich noch verbessert, da sich an der planen oder glatten Oberfläche des Materialbands keine Bakterien oder Kleinstlebewesen festsetzen und/oder dort anhaften können.

Es ist vorgesehen, dass am Füll- und/oder Bewuchskörper an der Innenseite des Materialbandes Innenlamellen angeordnet sind. Die Innenlamellen vergrößern die Oberfläche des Füll- und/oder Bewuchskörpers, an der sich Bakterien und/oder Kleinorganismen ansiedeln können. Zugleich wird durch die Innenlamellen die Stabilität des Füll- und/oder Bewuchskörpers erhöht. Dadurch wird eine Deformation durch Druck oder Schlag oder Anprallen des Füll- und/oder Bewuchskörpers an im Klärbecken vorhandenen Maschinen oder Arbeitseinheiten reduziert. Auch der mögliche Abrieb wird hierdurch reduziert.

Es ist vorgesehen, dass die das Kreuz - oder Sternprofil bildenden Streben die nahezu gleiche Materialstärke wie das Materialband aufweisen. Damit wird ermöglicht, dass der Füll- und/oder Bewuchskörper optimierbar auf die speziellen Bedürfnisse in einem Abwasserklärbecken ist, und zugleich eine ausreichende Stabilität des Füll- und/oder Bewuchskörpers vorhanden ist, wobei aber zugleich der Materialeinsatz zur Herstellung des Füll- und/oder Bewuchskörpers reduzierbar ist.

Es ist vorgesehen, dass die Innenlamellen senkrecht zu einer den Mantel des Füll- und/oder Bewuchskörpers berührenden Kreistangente verlaufen und die Innenlamellen zwischen den Streben alternierend angeordnet sind und die Innenlamellen aus kleinen und großen Lamellen bestehen, wobei die Innenlammelen sich über die gesamte Höhe des Füll- und/oder Bewuchskörpers erstrecken. Durch die Auswahl der Innenlamellen, große und kleine Lamellen, alternierend angeordnet, ist gewährleistet, dass eine gute Durchströmung des Füll- und/oder Bewuchskörpers mit zu klärendem Abwasser im Klärbecken erfolgen kann, sodass die im bzw. am Füll- und/oder Bewuchskörper angesiedelten Bakterien und Kleinstorganismen die für sie vorgesehene Tätigkeit der organischen Reinigung erfüllen können. Durch die alternierende Anordnung der Innenlamellen, gesehen auf ein Kreissegment, ist eine optimierte Innenoberfläche des Füll- und/oder Bewuchskörpers im Verhältnis zum freibleibenden Raum innerhalb des Füll- und/oder Bewuchskörpers gewährleistet. Die Anordnung der Innenlamellen, sich über die gesamte Höhe des Füllkörpers und/oder Bewuchskörpers erstreckend, erzeugt eine weitere Stabilität des Füll- und/oder Bewuchskörpers gegenüber Einwirkungen von äußeren Kräften.

Es ist vorgesehen, dass die Innenlamellen senkrecht zu einer den Mantel berührenden Kreistangente verlaufen und mindestens vier große Lamellen äquidistant zueinander angeordnet sind, wobei die Innenlamellen sich über die gesamte Höhe des Füll- und/oder Bewuchskörpers erstrecken. Durch die Verwendung von vier großen Innenlamellen wird ein guter Durchfluss des Wassers durch den Füll- und/oder Bewuchskörper ermöglicht.

Es ist vorgesehen, dass die großen Lamellen eine quaderförmige Grundform besitzen und sich nahezu bis zu einem Viertel des Durchmessers des Füll- und/oder Bewuchskörpers hineinerstrecken und die kleinen Lamellen eine dreieckige Grundform besitzen und nur maximal hälftig gegenüber den großen Lamellen in den Füll- und/oder Bewuchskörper hineinragen. Durch diese Formgestaltung und Auswahl der Größe der Innenlamellen ist gewährleistet, dass eine ausreichende Durchströmung mit zu klärendem Abwasser beim Einsatz des Füll- und/oder Bewuchskörpers in einem Klärbecken ermöglicht ist und zugleich ausreichend Oberfläche am bzw. im Füll- und/oder Bewuchskörpers vorhanden ist, damit sich Bakterien und/oder Kleinorganismen am/im Füll- und/oder Bewuchskörper ansiedeln können.

Vorteilhaft ist vorgesehen, dass das Sternprofil von vier bis acht gleichen Streben gebildet ist, wobei die Streben zueinander punktsymmetrisch angeordnet sind. Durch diese Auswahl der Anzahl der Streben für das Sternprofil und deren Anordnung ist wiederrum eine besondere Stabilität des Füll- und/oder Bewuchskörpers gewährleistet und zugleich wird eine gute Durchströmung mit zu klärendem Abwasser des Füll- und/oder Bewuchskörpers, wenn er sich im Klärbecken befindet, gewährleistet. Im Füll- und/oder Bewuchskörper sind alternativ oder zusätzlich vier bis vierundzwanzig große Lamellen und acht bis sechsunddreißig kleine Lamellen angeordnet, wobei die großen und kleinen Lamellen jeweils symmetrisch zu den Streben angeordnet sind. Durch diese Auswahl der Anzahl der großen und kleinen Lamellen und deren Anordnung gegenüber den Streben ist eine besonders vorteilhafte Herstellung des Füll- und/oder Bewuchskörpers, sowie eine gute Stabilität des Füll- und/oder Bewuchskörpers gewährleistet.

Vorteilhaft ist vorgesehen, dass der Füll- und/oder Bewuchskörper einen Durchmesser zwischen acht und fünfundsiebzig Millimeter und eine Länge von mindestens acht Millimeter bis zu fünfundsiebzig Millimeter besitzt. Durch diese Auswahl der Länge ist der Füllkörper auf die bekannten, in Kläranlagen eingesetzte Pumpen oder Rührwerke angepasst, sodass vermieden wird, dass es zu Beschädigungen oder Abrieb am Füll- und/oder Bewuchskörper kommt, wenn dieser zu groß gewählt ist. Zusätzlich oder alternativ ist vorgesehen, dass der Füll- und/oder Bewuchskörper aus einer einzigen Kunststoffmaterialart besteht, wobei als Kunststoffmaterialart PE, PP, HDPE oder LDPE zur Anwendung kommt, wobei vorzugsweise Recyclingkunststoffmaterial in Granulatform verwendbar ist.

Durch die Verwendung von Recyclingkunststoffmaterial wird eine besonders effektive und hohe Ökobilanz erreicht. Der Einsatz von Kunststoffmaterial PE, PP, HDPE oder LDPE, als reiner Kunststoff, das heißt kein Mischkunststoffmaterial, ermöglicht es, die Füll- und/oder Bewuchskörper nach deren Austausch zu recyceln.

Vorteilhaft ist vorgesehen, dass das Kunststoffmaterial durch Einsatz von Additiven bei der Verarbeitung eine mittlere Dichte von 0,85 bis 1,3 Gramm pro Kubikzentimeter, vorzugsweise von 0,92 bis 1,2 Gramm pro Kubikzentimeter besitzt. Dadurch wird eine besonders effektive und gute Verarbeitung des Kunststoffmaterials gewährleistet und die Füll- und/oder Bewuchskörper werden in der gewünschten Form produziert.

Vorteilhaft ist vorgesehen, dass das Materialband eine Steigung mit einem Steigungsfaktor zwischen zwei und vierzehn den Füll- und/oder Bewuchskörper umschlingt. Durch die Wahl dieses Steigungsbereiches wird eine optimale Formgebung des Füll- und/oder Bewuchskörpers, insbesondere Ausgestaltung der Mantelfläche erreicht, sodass der Füll- und/oder Bewuchskörper eine ausreichende Stabilität erhält, zugleich aber ausreichend Durchströmung mit zu klärendem Abwasser beim Einsatz in einem Klärbecken gewährleistet ist.

Vorteilhaft ist vorgesehen, dass das Materialband eine Breite von 0,3 Millimeter bis zwanzig Millimeter besitzt und das Materialband über die gesamte Mantelfläche des Füll- und/oder Bewuchskörpers die gleiche Breite besitzt oder in der Breite über den gesamten Mantel des Füll- und/oder Bewuchskörper variiert. Durch diese Wahl der Breite des Materialbandes und/oder seiner Variierung in der Breite wird eine besonders effektive Durchströmung beim Einsatz des Füll- und/oder Bewuchskörpers in einem Klärbecken einer Kläranlage erreicht.

Vorteilhaft ist vorgesehen, dass das Materialband, die Streben des Kreuz- oder Sternprofils und die Innenlamellen Poren auf ihren Außenflächen ausbilden und/oder Durchbrüche besitzen können. Damit wird die wirksame Oberfläche des Füll- und/oder Bewuchskörpers vergrößert, und es können sich an und im Material des Füll- und/oder Bewuchskörpers entsprechend mehr Bakterien und/oder Kleinorganismen ansiedeln. Alternativ oder zusätzlich ist vorgesehen, dass die Poren und/oder Durchbrüche stochastisch verteilt angeordnet sind.

In einer vorteilhaften Ausgestaltung ist vorgesehen, dass die Poren und/oder Durchbrüche bei der Herstellung eines Füll- und/oder Bewuchskörpers durch ein Aufschäumen des fließfähigen Kunststoffmaterials vor oder während der Herstellung mittels Extrusion erzeugbar sind. Alterantiv oder zusätzlich ist vorgesehen, dass die Poren und/oder Durchbrüche eine Größe zwischen 100 bis 500 Mikron besitzen.

Vorteilhaft ist vorgesehen, dass ein Füll- und/oder Bewuchskörper in einem Extrusionsverfahren herstellbar ist. Damit wird eine besonders schnelle Produktion und auch eine kostengünstige Produktion ermöglicht.

Vorteilhafte Ausgestaltungen der Erfindung ergeben sich anhand der Unteransprüche, der weiteren Beschreibung und insbesondere anhand der Beschreibung anhand eines konkreten Ausführungsbeispiels anhand von Figuren.

In den Figuren dargestellte Ausführungsbeispiele sind nicht maßstäblich und können bei konkreter Ausgestaltung oder Ausführung oder Ausführungsverfahren vom veranschaulichten abweichen.

In den Figuren zeigt:
- FIG 1: eine perspektivische Darstellung eines Füll- und/oder Bewuchskörpers;
- FIG 2: einen Ausschnitt einer seitlichen Ansicht eines Füll- und/oder Bewuchskörpers; und
- FIG 3: einen Querschnitt durch einen Füll- und/oder Bewuchskörper;

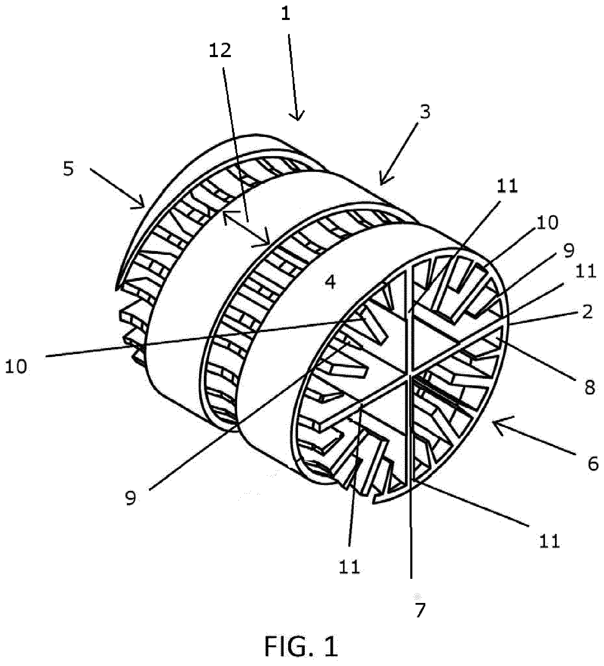

In FIG. 1 ist eine perspektivische Darstellung eines Füll- und/oder Bewuchskörpers 1 dargestellt. Der Füll- und/oder Bewuchskörper 1 bildet eine hohlzylindrische Form aus, wobei der Mantel 3 des Hohlzylinders von einem Materialband 4 gebildet wird, das den Füll- und/oder Bewuchskörper 1 in einer Spiralform umschließt. An der Oberseite 5 und der Unterseite 6 des Füll- und/oder Bewuchskörpers 1 geht das Materialband 4 in eine ebene Oberseite über und bildet einen oberen und unteren Rand aus, der den Füll- und/oder Bewuchskörper 1 obenseitig und untenseitig abschließt. Im Füll- und/oder Bewuchskörper 1 sind Streben 11 angeordnet, die in der Ausgestaltung nach FIG. 1 ein Kreuzprofil 7 ausbilden. Das Kreuzprofil 7 schließt an der Innenseite 8 des Materialbands 4 an. Das Materialband 4 schlingt sich spiralförmig um das Kreuzprofil 7.

An der Innenseite 8 des Materialbands 4 sind Innenlamellen 9, 10 angeordnet.

In einer besonders vorteilhaften Ausgestaltung der Erfindung umläuft das Materialband 4 den Mantel 3 des Füll- und/oder Bewuchskörpers 1 in Form einer hyperbolischen Spirale.

Die Innenlamellen 9, 10, bestehen aus kleine Lamellen 9 und großen Lamellen 10 und sind an der Innenseite 8 des Materialbands 4 angeordnet. Die Stärke der Innenlamellen 9, 10 ist größer als die Stärke des Kreuzprofils 7 und des Materialbands 4. Es kann jedoch auch, je nach Konstellation und Einsatzzweck des Füll- und/oder Bewuchskörpers 1, die Dimensionierung der einzelnen Elemente anders und unterschiedlich gewählt werden.

Die großen Lamellen 10 sind im Querschnitt quaderförmig ausgestaltet und erstrecken sich durchgehend von der Oberseite 5 bis zur Unterseite 6 des Füll- und/oder Bewuchskörpers 1. In einer vorteilhaften Ausgestaltung der Erfindung sind die in den Füll- und/oder Bewuchskörper 1 hineinragenden Seitenkanten der Innenlamellen 9, 10 S-förmig ausgestaltet oder besitzen eine Wellenform.

Die kleinen Lamellen 9 besitzen dreiecksförmig Querschnitt.

Über ein Viertelkreissegment gesehen, sind die kleinen und großen Lamellen 9, 10 jeweils äquidistant zueinander und alternierend angeordnet. Neben einer Strebe 11 des Kreuzprofils 7 ist eine kleine Lamelle 9, dann eine große Lamelle 10, gefolgt von einer kleiner Lamelle 9, dieser gefolgt von einer großen Lamelle 10 und diese wiederum gefolgt von einer kleinen Lamelle 9 angeordnet. Die Innenlamellen 9, 10 sind an der Innenseite 8 des Lamellenbands 4 angeordnet.

Die Formgestaltung der Innenlamellen 9, 10 ist strömungstechnisch optimiert.

Die großen Lamellen 10 ragen etwa ein Viertel des Durchmessers in den Füll- und/oder Bewuchskörpers 1 hinein. Die kleinen Lamellen 9 ragen in etwa nur hälftig der Länge der großen Lamellen in den Füll- und/oder Bewuchskörper 1 hinein.

In einer alternativen Ausgestaltung der Erfindung kann anstelle des Kreuzprofils 7 ein Sternprofil gewählt werden, wobei die Streben 11 eines Sternprofils ebenfalls die gesamte Länge des Füll- und/oder Bewuchskörpers 1 von der Ober- 5 bis zur Unterseite 6 vollständig durchlaufen.

Bei Einsatz eines Sternprofils hat es sich insbesondere von Vorteil gezeigt, ein Sternprofil mit sechs oder acht Streben vorzusehen, wobei die Streben zueinander punktsymmetrisch angeordnet sind.

Im Füll- und/oder Bewuchskörper 1 sind in der Ausführung gemäß FIG. 1 in einem Vierteilkreis zwei große Lamellen 10 und drei kleine Lamellen 9 angeordnet, sodass sich auf den gesamten Füll- und/oder Bewuchskörper 1 acht große Lamellen 10 und zwölf kleine Lamellen 10 ergeben. Es können jedoch Variationen von vier bis vierundzwanzig großen Lamellen 10 und zwölf bis sechsunddreißig kleinen Lamellen 9 angeordnet sein.

Der Durchmesser des Füll- und/oder Bewuchskörpers 1 variiert zwischen acht Millimeter und fünfundsiebzig Millimeter. Die Länge des Füll- und/oder Bewuchskörpers 1 liegt zwischen acht Millimeter bis fünfundsiebzig Millimeter.

Der Füll- und/oder Bewuchskörper 1 wird aus einer einzigen Kunststoffmaterialart hergestellt. Es hat sich als besonders vorteilhaft gezeigt, PE (Polyethylen), PP (Polypropylen), HDPE (Polypropylen mit hoher Dichte, sogenanntes High Density Polypropylen) oder LDPE (Low Density Polypropylen; Polypropylen mit geringer Dichte) einzusetzen.

In einer vorzugsweisen Ausgestaltung der Erfindung wird nur Recyclingkunststoffmaterial in Form von Granulat verwendet.

Um eine bessere Verarbeitung des Kunststoffmaterials, angepasst auf den Einsatzzweck des Füll- und/oder Bewuchskörpers 1 zur erreichen, wird das Kunststoffmaterial vor der Verarbeitung mit Additiven versetzt, sodass sich eine mittlere Dichte des Kunststoffmaterials von 0,85 - 1,3 Gramm/cm³ ergibt.

Im Weiteren hat es sich als besonders vorteilhaft gezeigt, die Steigung des Materialbands 4, das den Mantel 3 des Füll- und/oder Bewuchskörpers 1 ausbildet, mit einem Steigungsfaktor zwischen zwei und zwölf zu wählen. Das Materialband 4 besitzt eine Breite 12 zwischen 0,3 Millimeter bis zwanzig Millimeter, je nach Einsatzzweck und Einsatzart des Füll- und/oder Bewuchskörpers 1. Das Materialband 4 erstreckt sich entweder in gleicher Breite 12 über den gesamten Füll- und/oder Bewuchskörper 1 und bildet damit über den gesamten Mantel 3 eine gleiche Materialbandbreite aus. Alternativ kann aber auch über den gesamten Füll- und/oder Bewuchskörper 1 die Breite 12 des Materialbands 4 variieren.

Im Weiteren ist es vorteilhaft, wenn das Materialband 4, die Streben 11 des Kreuzprofils 7, sowie die Innenlamellen 9, 10, d. h. die großen Lamellen 10 und die kleinen Lamellen 9 zusätzlich Durchbrüche und/oder Poren besitzen. Dies erzeugt eine größere wirksame Oberfläche des Füll- und/oder Bewuchskörpers 1 und es können sich damit mehr und besser entsprechende Kleinorganismen oder Bakterien ansiedeln.

Es hat sich als vorteilhaft gezeigt, die Poren und/oder Durchbrüche stochastisch verteilt anzuordnen. Die Poren bzw. Durchbrüche können mittels eines Aufschäumprozesses des fließfähigen Kunststoffs, bei der Extrusion der Füll- und/oder Bewuchskörper 1 erzeugt werden.

Die Poren und/oder die Durchbrüche besitzen eine Größe zwischen 100 - 500 Mikron.

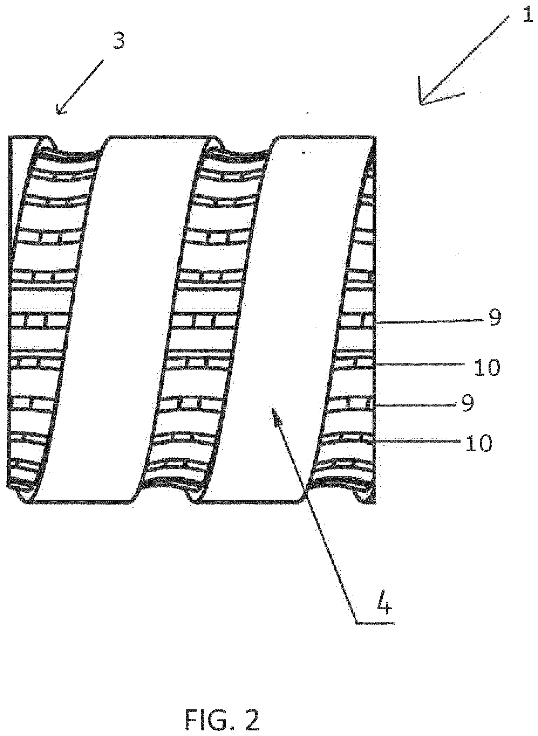

In FIG. 2 ist ein Ausschnitt aus einer seitlichen Ansicht eines Füll- und/oder Bewuchskörpers 1 dargestellt. Es ist dargestellt, dass sich das Materialband 4 in Form einer Wendel um den Füll- und/oder Bewuchskörper 1 windet und eine definierte Steigung aufweist. Der Mantel 3 des Füll- und/oder Bewuchskörpers 1 wird außenseitig von dem Materialband 4 gebildet. An der Innenseite 8 des Materialbands 4 sind das Kreuzprofil 7 und die Innenlamellen (9, 10) angebunden.

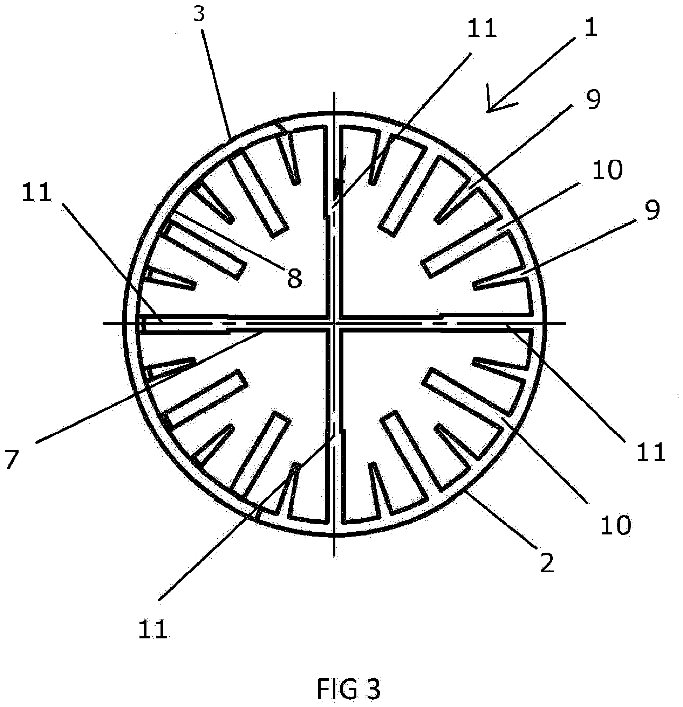

In FIG. 3 ist ein Querschnitt durch einen Füll- und/oder Bewuchskörper 1 dargestellt. Es ist das Materialband 4, das den Füll- und/oder Bewuchskörper 1 in Form einer Spirale umgibt, dargestellt. Im Weiteren ist dargestellt, dass das Materialband 4 mit den kleinen und großen Lamellen 9, 10, den Innenlamellen 9, 10 verbunden ist, sowie mit Kreuzprofil 7, gebildet von den Streben 11. Die hohlzylindrische Grundform 2 des Füll- und/oder Bewuchskörpers 1 ist dargestellt.

## Patentansprüche

1. Füll- und/oder Bewuchskörper (1) aus Kunststoff, eine im Wesentlichen kreiszylindrische Grundform (2) bildend, mit einem Mantel (3), der aus einem eine Spirale ausbildenden Materialband (4) besteht,
a. wobei das Materialband (4) eine hohlzylindrische Form des Füll- und/oder Bewuchskörper (1) ausbildet, in etwa mittig den Füll- und/oder Bewuchskörper (1) ein Kreuz- (7) oder Sternprofil durchläuft, das an der Unterseite (6) und der Oberseite (5) des Füll- und/oder Bewuchskörpers (1) mit dem Materialband (4) abschließt und die das Kreuz- (7) oder Sternprofil bildenden Streben (11) die gleiche Stärke wie das Materialband (4) aufweisen,
b. wobei an der Innenseite (8) des Materialbands (4) Innenlamellen (9, 10) angeordnet sind,
c. wobei die Innenlamellen (9, 10) senkrecht zu einer den Mantel (3) berührenden Kreistangente verlaufen und wobei die Innenlamellen (9, 10) zwischen den Streben (11) alternierend angeordnet sind und aus kleinen (9) und großen Lamellen (10) bestehen, und wobei die Innenlamellen (9, 10) sich über die gesamte Höhe des Füll- und/oder Bewuchskörpers (1) erstrecken,
d. wobei mindestens vier große Lamellen (10) äquidistant zueinander angeordnet sind, wobei die Innenlamellen (9, 10) sich über die gesamte Höhe des Füll- und/oder Bewuchskörpers (1) erstrecken,e. wobei die großen Lamellen (10) eine quaderförmige Grundform besitzen und sich nahezu bis zu einem Viertel des Durchmessers des Füll- und/oder Bewuchskörpers (1) in diesen hineinerstrecken und die kleinen Lamellen (9) eine dreieckige Grundform besitzen und nur maximal hälftig gegenüber den großen Lamellen (10) in den Füll- und/oder Bewuchskörpers (1) hineinragen, und
f. wobei das Materialband (4) Durchbrüche besitzt und die Durchbrüche stochastisch verteilt angeordnet sind und das Materialband (4) eine plane oder wellige Oberfläche aufweist.

2. Füll- und/oder Bewuchskörper (1) nach Patentanspruch 1, **dadurch gekennzeichnet, dass** das Sternprofil von sechs oder acht gleichen Streben (11) gebildet ist, wobei die Streben (11) zueinander punktsymmetrisch angeordnet sind und/oder dass im Füll- und/oder Bewuchskörper (1) vier bis vierundzwanzig große Lamellen (10) und zwölf bis sechsunddreißig kleine Lamellen (9) angeordnet sind, wobei die großen (10) und kleinen Lamellen (9) jeweils symmetrisch zu den Streben (11) angeordnet sind.

3. Füll- und/oder Bewuchskörper (1) nach einem der vorangehenden Patentansprüche, **dadurch gekennzeichnet, dass** der Füll- und/oder Bewuchskörper (1) einen Durchmesser zwischen acht und fünfundsiebzig Millimeter und eine Länge von mindestens acht bis zu fünfundsiebzig Millimeter aufweist und/oder dass der Füll- und/oder Bewuchskörper (1) aus einer Kunststoffmaterialart besteht und als Kunststoffmaterialart PE, PP, HDPE, oder LDPE zur Anwendung kommt, wobei vorzugsweise Recyclingkunststoffmaterial in Granulatform verwendbar ist.

4. Füll- und/oder Bewuchskörper (1) nach einem der vorangehenden Patentansprüche, **dadurch gekennzeichnet, dass** Kunststoffmaterial durch den Einsatz von Additiven bei der Verarbeitung eine mittlere Dichte von 0,92 bis 1,2 Gramm pro Kubikzentimeter besitzt.

5. Füll- und/oder Bewuchskörper (1) nach einem der vorangehenden Patentansprüche, **dadurch gekennzeichnet, dass** das Materialband (4) in einer Steigung mit einem Steigungsfaktor zwischen zwei und vierzehn den Füll- und/oder Bewuchskörper (1) umschlingt.

6. Füll- und/oder Bewuchskörper (1) nach einem der vorangehenden Patentansprüche, **dadurch gekennzeichnet, dass** das Materialband (4) eine Breite von 0,3 Millimeter bis 20 Millimeter besitzt und das Materialband (4) über den gesamten Mantel (3) des Füll- und/oder Bewuchskörpers (1) die gleiche Breite (12) besitzt oder in der Breite (12) über den gesamten Füll- und/oder Bewuchskörper (1) variiert.

7. Füll- und/oder Bewuchskörper (1) nach einem der vorangehenden Patentansprüche, **dadurch gekennzeichnet, dass** die Streben (11) des Kreuz- (7) oder Sternprofils und/oder die Innenlamellen (9, 10) Poren auf ihren Außenflächen ausbilden oder Durchbrüche besitzen und dass die Poren oder Durchbrüche stochastisch verteilt angeordnet sind.

8. Füll- und/oder Bewuchskörper (1) nach Patentanspruch 7, **dadurch gekennzeichnet, dass** die Poren bei der Herstellung des Füll- und/oder Bewuchskörper (1) durch ein Aufschäumen des fließfähigen Kunststoffmaterials erzeugbar sind und/oder dass die Poren oder Durchbrüche eine Größe zwischen 100 bis 500 Mikron besitzen.

9. Füll- und/oder Bewuchskörper (1) nach einem der vorangehenden Patentansprüche, **dadurch gekennzeichnet, dass** ein Füll- und/oder Bewuchskörper (1) in einem Extrusionsverfahren herstellbar ist.

## Claims

1. Packing- and/or Growth carrier (1) made of synthetic material, a substantially circular cylindrical base shape (2) forming a circumferential shell (3), which consist of a material ribbon (4) forming a spiral,
a. wherein the material ribbon (4) forming a hollow cylindrical shape of the Packing- and/or Growth carrier (1), approximately in the middle of the Packing- and/or Growth carrier (1) a cross- (7) or a star-profile passes through, which ends at the bottom side (6) and at the upper side (5) of the Packing- and/or Growth carrier (1) with the material ribbon (4) and the cross-(7) or star-profile forming bars (11) having the same thickness as the material ribbon (4),
b. wherein on the inner side (8) of the material ribbon (4) inner-lamellas (9, 10) are arranged,
c. wherein on the inner-lamellas (9, 10) extend perpendicularly to a tangent contacting the circumferential shell (3) and wherein the inner-lamellas (9, 10) arranged alternating between the bars (11) and consist of small (9) and tall lamellas (10), and wherein the inner-lamellas (9, 10) extend the entire hight of the Packing- and/or Growth carrier (1),
d. wherein at least four tall lamellas (10) arranged equidistant to each other, wherein the inner-lamellas (9, 10) extend the entire hight of the Packing- and/or Growth carrier (1),
e. wherein the tall lamellas (10) having a cuboidal type and extend almost up to a quarter of the diameter of the Packing- and/or Growth carrier (1) and the small lamellas (9) having a triangular type and the small lamellas (9) almost extend up to the half of the tall lamellas (10) of the Packing- and/or Growth carrier (1), and
f. wherein the material ribbon (4) having openings and the openings are arranged in a stochastically distributed manner, and the material ribbon (4) having a flat or an undulate surface.

2. Packing- and/or Growth carrier (1) according to claim 1 **characterized in, that** the star-profile is formed by six or eight identical bars (11), wherein the bars (11) are arranged point symmetrical to each other and/or that in the Packing- and/or Growth carrier (1) four to twenty-four tall lamellas (10) and twelve to thirty-six small lamellas (9) are arranged, wherein the tall lamellas (10) and the small lamellas (9) are each arranged symmetrical to the bars (11).

3. Packing- and/or Growth carrier (1) according to any of the previous claims, **characterized in, that** the Packing- and/or Growth carrier (1) having a diameter between eight and seventy-five millimetre and a length of at least eight and seventy-five millimetre and/or that the Packing- and/or Growth carrier (1) is made of a synthetic material and as synthetic material is applied PE, PP, HDPE or LDPE, wherein preferably recycled synthetic material is used in granulate form.

4. Packing- and/or Growth carrier (1) according to any of the previous claims, **characterized in, that** the synthetic material having through the use of additives a mean density of 0,92 to 1,2 g/cm³.

5. Packing- and/or Growth carrier (1) according to any of the previous claims, **characterized in, that** the material ribbon (4) wraps at a grade with a grade factor between two and fourteen around the Packing- and/or Growth carrier (1).

6. Packing- and/or Growth carrier (1) according to any of the previous claims, **characterized in, that** the material ribbon (4) having a breadth from 0,3 millimetre to 20 millimetre and the material ribbon (4) having the same breadth or having a various width over the entire circumferential shell (3) of the Packing- and/or Growth carrier (1).

7. Packing- and/or Growth carrier (1) according to any of the previous claims, **characterized in, that** the bars (11) of the cross- (7) or a star-profile and/or the inner-lamellas (9, 10) form pores or openings on their outer surfaces and that the pores or openings are arranged stochastically distributed.

8. Packing- and/or Growth carrier (1) according to claim 7, **characterized in, that** the pores be manufactured during the manufacturing process of the Packing- and/or Growth carrier (1) by foaming the flowable synthetic material and/or that the pores or openings have a size between 100 and 500 microns.

9. Packing- and/or Growth carrier (1) according to any of the previous claims, **characterized in, that** the Packing- and/or Growth carrier (1) is manufacturable in an extrusion-process.

## Revendications

1. Corps de remplissage et/ou d'encrassement (1) en matière plastique, formant une forme de base (2) sensiblement cylindrique circulaire, avec une enveloppe (3), qui est constituée d'une bande de matériau (4) réalisant une spirale,
a. dans lequel la bande de matériau (4) réalise une forme cylindrique creuse du corps de remplissage et/ou d'encrassement (1), un profilé en croix (7) ou en étoile, qui se termine sur la face inférieure (6) et la face supérieure (5) du corps de remplissage et/ou d'encrassement (1) par la bande de matériau (4), traverse à peu près de manière centrale le corps de remplissage et/ou d'encrassement (1) et les entretoises (11) formant le profilé en croix (7) ou en étoile présentent la même épaisseur que la bande de matériau (4),
b. dans lequel des lamelles intérieures (9, 10) sont disposées sur la face intérieure (8) de la bande de matériau (4),
c. dans lequel les lamelles intérieures (9, 10) s'étendent perpendiculairement à une tangente de cercle touchant l'enveloppe (3) et dans lequel les lamelles intérieures (9, 10) sont disposées en alternance entre les entretoises (11) et sont constituées de petites (9) et grandes lamelles (10), et dans lequel les lamelles intérieures (9, 10) s'étendent sur toute la hauteur du corps de remplissage et/ou d'encrassement (1),
d. dans lequel au moins quatre grandes lamelles (10) sont disposées de manière équidistante les unes par rapport aux autres, dans lequel les lamelles intérieures (9, 10) s'étendent sur toute la hauteur du corps de remplissage et/ou d'encrassement (1), dans lequel les grandes lamelles (10) possèdent une forme de base parallélépipédique et s'étendent presque jusqu'à un quart du diamètre du corps de remplissage et/ou d'encrassement (1) dans celui-ci et les petites lamelles (9) possèdent une forme de base triangulaire et ne font saillie dans le corps de remplissage et/ou d'encrassement (1) qu'au maximum à moitié par rapport aux grandes lamelles (10), et
f. dans lequel la bande de matériau (4) possède des percées et les percées sont disposées de façon répartie de manière stochastique et la bande de matériau (4) présente une surface plane ou ondulée.

2. Corps de remplissage et/ou d'encrassement (1) selon la revendication 1, **caractérisé en ce que** le profilé en étoile est formé par six ou huit entretoises (11) identiques, dans lequel les entretoises (11) sont disposées à symétrie ponctuelle les unes par rapport aux autres et/ou que quatre à vingt-quatre grandes lamelles (10) et douze à trente-six petites lamelles (9) sont disposées dans le corps de remplissage et/ou d'encrassement (1), dans lequel les grandes (10) et petites lamelles (9) sont disposées respectivement de manière symétrique par rapport aux entretoises (11).

3. Corps de remplissage et/ou d'encrassement (1) selon l'une quelconque des revendications précédentes, **caractérisé en ce que** le corps de remplissage et/ou d'encrassement (1) présente un diamètre compris entre huit et soixante-quinze millimètres et une longueur d'au moins huit à soixante-quinze millimètres et/ou que le corps de remplissage et/ou d'encrassement (1) est constitué d'un type de matière plastique et que le PE, PP, HDPE ou LDPE est utilisé comme type de matière plastique, dans lequel de préférence une matière plastique recyclée sous forme de granulés peut être utilisée.

4. Corps de remplissage et/ou d'encrassement (1) selon l'une quelconque des revendications précédentes, **caractérisé en ce que** la matière plastique du fait de l'utilisation d'additifs lors du traitement possède une densité moyenne de 0,92 à 1,2 grammes par centimètre cube.

5. Corps de remplissage et/ou d'encrassement (1) selon l'une quelconque des revendications précédentes, **caractérisé en ce que** la bande de matériau (4) enlace le corps de remplissage et/ou d'encrassement (1) selon une inclinaison avec un facteur d'inclinaison compris entre deux et quatorze.

6. Corps de remplissage et/ou d'encrassement (1) selon l'une quelconque des revendications précédentes, **caractérisé en ce que** la bande de matériau (4) possède une largeur de 0,3 millimètre à 20 millimètres et la bande de matériau (4) sur toute l'enveloppe (3) du corps de remplissage et/ou d'encrassement (1) possède la même largeur (12) ou varie dans la largeur (12) sur tout le corps de remplissage et/ou d'encrassement (1).

7. Corps de remplissage et/ou d'encrassement (1) selon l'une quelconque des revendications précédentes, **caractérisé en ce que** les entretoises (11) du profilé en croix (7) ou en étoile et/ou les lamelles intérieures (9, 10) réalisent des pores sur leurs surfaces extérieures ou possèdent des percées et que les pores ou percées sont disposé(e)s de manière répartie de façon stochastique.

8. Corps de remplissage et/ou d'encrassement (1) selon la revendication 7, **caractérisé en ce que** les pores lors de la fabrication du corps de remplissage et/ou d'encrassement (1) peuvent être produits par un moussage de la matière plastique coulante et/ou que les pores ou percées possèdent une taille comprise entre 100 et 500 microns.

9. Corps de remplissage et/ou d'encrassement (1) selon l'une quelconque des revendications précédentes, **caractérisé en ce qu'**un corps de remplissage et/ou d'encrassement (1) peut être fabriqué lors d'un procédé d'extrusion.
